# EUROPEAN PATENT APPLICATION

(11) **EP 4 592 068 A1**
(43) Date de publication de la demande: **30.07.2025**
(21) Numéro de dépôt: 25152744.6
(22) Date de dépôt: 20.01.2025
(51) Int. Cl.: B29D 30/00

(54) **DÉTRAITMENT UNIFIÉ PAR VERSEMENT DE MÉTÉHODE POUR PRÉLISION PARA DÉ PNEUMATISÉE**

(30) Priorité: 23.01.2024 FR 2400644
(71) Demandeur: Goodyear France s.a.s., 92400 Courbevoie (FR)
(72) Inventeur: COLIN DE VERDIÈRE, François, 92200 Neuilly sur Seine (FR); ERAUD, Pierre Jean, 80000 Amiens (FR); LEBON, Jean, 71337 Amiens (FR); BELLARD, Maxime, 80110 Hangard (FR); DIMPRE, Vincent, 80800 Vaux sur Somme (FR); LEBOEUF, Antoine, 80000 Amiens (FR); AUDIBERT, Luc, L-9028 Warken (LU); DA SILVA, Johanna, 62128 Boyelles (FR); BOUCHET, Christophe, 80000 Amiens (FR); DAHOU, Samir, 80480 Pont-de-Metz (FR)
(74) Mandataire: Kutsch, Bernd

(57) **Abrégé**

La présente invention concerne une méthode pour un remplacement d'une unité de traitement pour la préparation d'un élément de pneumatique, l'élément étant de type P, au cours d'un procédé non interrompu de production de pneumatique dans une usine de production pneumatique et une méthode de modernisation d'une usine de pneumatique comprennent des remplacements d'unités de traitement, ces remplacements se faisant selon ladite méthode de remplacement de la présente invention. De plus, la présente invention concerne un procédé de production pneumatique utilisant la méthode selon la présente invention et une usine de production de pneumatique pour mettre en oeuvre ledit procédé.

## Description

La présente invention concerne une méthode pour un remplacement d'une unité de traitement pour la préparation d'un élément de pneumatique, au cours d'un procédé non interrompu de production de pneumatique dans une usine de production de pneumatique. De plus, la présente invention concerne une méthode de modernisation d'une usine de production de pneumatique comprenant l'utilisation de la méthode de remplacement de la présente invention, un procédé de production pneumatique utilisant la méthode selon la présente invention et une usine de production de pneumatique pour mettre en œuvre ledit procédé.

Une usine de production pneumatique comprend en général un ou plusieurs bâtiments dans lesquels les pneumatiques sont fabriqués à l'aide de plusieurs unités de traitement. Les usines doivent être organisées afin de répondre rapidement aux changements des commandes de pneumatiques. En effet, une usine doit être capable de changer de ligne de fabrication rapidement pour rester compétitive tout en améliorant la qualité de ses pneumatiques. De plus, compte tenu des nouveaux règlements dans le domaine de l'automobile, de nouvelles problématiques se posent en matière de pneumatique pour répondre à ses nouveaux besoins il faut pouvoir réagir vite afin d'adapter la production. C'est pourquoi, il y a un besoin de nouvelles méthodes pour la mise à niveau des usines afin de répondre aux règlements et besoins des clients.

Dans la présente invention, il a été trouvé qu'il est possible de faire ce type de mise à niveau tout en gardant les lignes de production opérationnelles. En effet, grâce à la présente invention, il n'est plus nécessaire de détruire des usines pour les mettre à niveau. Ceci est tout à fait bénéfique financièrement car la production de pneumatiques n'a pas besoin d'être interrompue pour sa mise à niveau ou sa modernisation, mais aussi du point de vue environnemental en évitant des destructions complètes avant reconstructions.

Ainsi, la présente invention concerne une méthode pour un remplacement d'une unité de traitement pour la préparation d'un élément de pneumatique, l'élément étant de type P, au cours d'un procédé non interrompu de production de pneumatique dans une usine de production pneumatique comprenant une unité de traitement UR, la méthode comprenant
(i) préparer un élément de pneumatique PR de type P dans l'unité de traitement UR, comprenant
   (i.1) diriger au moins un flux SE comprenant au moins un composant E pour l'élément de pneumatique de type P dans l'unité UR ;
   (i.2) traiter l'au moins un composant E dans l'unité UR, obtenant l'élément PR de type P ;
   (i.3) retirer un flux SPR comprenant l'élément PR de l'unité UR ;
(ii) préparer une unité de traitement UN pour mise en fonction, comprenant
   (ii.1) fournir l'unité de traitement UN ;
   (ii.2) installer l'unité UN à un emplacement dans l'usine de production de pneumatique permettant le passage du au moins un flux SE dans UN ;
   (ii.3) mettre l'unité UN dans un état prêt à fonctionner ;
(iii) remplacer au moins partiellement le traitement de l'au moins un composant E dans l'unité UR par le traitement dans l'unité UN, comprenant
   (iii.1) rediriger au moins une partie du flux SE, sans l'interrompre, de l'unité UR vers l'unité UN;
   (iii.2) traiter l'au moins une partie du flux SE dans l'unité UN, obtenant un élément PN de type P; et
   (iii.3) retirer un flux SPN comprenant l'élément PN de l'unité UN ;
   dans laquelle l'unité UR et l'unité UN sont du même type.

De préférence l'unité UR et l'unité UN sont sélectionnées parmi le groupe consistant en une unité de mélange, une unité d'extrusion, une unité de coupe, une unité d'enroulement des perles et d'application d'apex, une unité d'assemblage et une unité de vulcanisation.

Grâce à la méthode de la présente invention, une usine de production de pneumatique peut changer tout ou une partie de son équipement sans avoir à fermer l'usine et arrêter la production.

De préférence, le remplacement d'unité de traitement par d'autre unité de traitement du même type selon la présente invention, notamment lors d'un procédé ininterrompu de production de pneumatique, permet de moderniser (et/ou mettre à niveau) toute une usine sans délocaliser et détruire les éléments existants. Cela a un très fort impact sociétal mais aussi environnemental.

La méthode de la présente invention évite la fermeture totale d'une usine et l'arrêt de la production. Cela permet de continuer à produire des pneumatiques pendant la modernisation ce qui est un avantage économique certain, de préserver des emplois en évitant la délocalisation dans une autre région ou un autre pays où la construction d'une usine semblerait plus avantageuse.

De préférence le flux SE dirigé selon (i.1) est continu ou discontinu.

De préférence le flux SPR comprenant l'élément PR de l'unité UR est en outre dirigé à une étape ultérieure du procédé non interrompu de production pneumatique.

De préférence l'unité de traitement UN fournie selon (ii.1) remplaçant l'unité UR est une unité ayant plus de fonctionnalités techniques que cette unité UR.

De préférence l'unité de traitement UN fournie selon (ii.1) est une unité de traitement permettant l'automatisation au moins partielle, plus préférablement l'automatisation, dudit traitement.

De préférence l'installation de UN selon (ii.2) se fait soit dans une zone existante Z1 comprenant UR, soit dans une zone Z2 de l'usine à un emplacement dans l'usine de production de pneumatique permettant le passage du au moins un flux SE dans UN , Z1 étant différente de Z2.

Optionnellement, la zone Z2 peut être une zone préexistante à l'usine avant le remplacement ou une nouvelle zone créée pour le remplacement. Cette nouvelle zone peut être un nouveau bâtiment par exemple.

De préférence la méthode comprend en outre avant (i)
- la fourniture de l'unité de traitement UR,
- l'installation de UR dans l'usine, plus préférablement dans une zone Z1, permettant le passage du au moins un flux SE dans UR; et
- la mise en état de UR dans un état prêt à fonctionner.

De préférence mettre l'unité UN dans un état prêt à fonctionner selon (ii.3) comprend la programmation de cette unité, plus préférablement pour le fonctionnement optimal de cette unité au sein du procédé non interrompu de production de pneumatique.

Dans le contexte de la présente invention, le terme « procédé non interrompu » signifie que les étapes du procédé de production de pneumatique ne sont pas interrompues.

De préférence, la programmation se fait avec un programme d'ordinateur et/ou par un opérateur de l'usine.

De préférence (iii.1) comprend l'arrêt progressif de la direction du flux SE dans UR. De préférence (iii.1) comprend rediriger le flux SE, sans l'interrompre, de l'unité UR vers l'unité UN.

De préférence, le flux SE est continu ou discontinu.

De préférence le flux SPN comprenant l'élément PN de l'unité UR est en outre dirigé à une étape ultérieure dans le procédé non interrompu de production pneumatique.

Il est possible que le flux SPN et le flux SPR soient mélangés pour ou à l'étape ultérieure.

De préférence, quand l'unité UR et l'unité UN sont des unités de mélange, le composant E comprend au moins deux composés chimiques, plus préférablement au moins un des deux composés chimiques étant du caoutchouc naturel et/ou synthétique.

De préférence, quand l'unité UR et l'unité UN sont des unités de mélange, le traitement selon (i.2) et (ii.2) dans ces unités de mélange comprend mélanger le composant E comprenant au moins deux composés chimiques, plus préférablement dans laquelle au moins un des deux composés chimiques est du caoutchouc naturel et/ou synthétique.

Cela permet d'obtenir avec le traitement selon (i.2) un élément PR étant un mélange de composés chimiques et avec le traitement selon (ii.2) un élément PN étant un mélange de composés chimiques.

De préférence, quand l'unité UR et l'unité UN sont des unités d'extrusion, le composant E comprend un mélange de composés chimiques, plus préférablement comprenant du caoutchouc naturel et/ou synthétique.

De préférence, quand l'unité UR et l'unité UN sont des unités d'extrusion, le traitement selon (i.2) et (ii.2) dans ces unités d'extrusion comprend extruder un mélange de composés chimiques, plus préférablement comprenant du caoutchouc naturel et/ou synthétique.

Cela permet d'obtenir avec le traitement selon (i.2) un élément PR étant une bande extrudée et avec le traitement selon (ii.2) un élément PN étant une bande extrudée.

De préférence, quand l'unité UR et l'unité UN sont des unités d'assemblage, le composant E comprend des composants de pneumatique, plus préférablement incluant une carcasse, des flancs et une bande de roulement.

De préférence, quand l'unité UR et l'unité UN sont des unités d'assemblage, le traitement selon (i.2) et (ii.2) dans ces unités d'assemblage comprend assembler des composants de pneumatique sur un tambour de fabrication, dans laquelle plus préférablement les composants de pneumatique comprennent une carcasse, des flancs et une bande de roulement.

Cela permet d'obtenir avec le traitement selon (i.2) un élément PR étant un pneumatique non vulcanisé et avec le traitement selon (ii.2) un élément PN étant un pneumatique non vulcanisé.

De préférence, quand l'unité UR et l'unité UN sont des unités de vulcanisation, le composant E est un pneumatique non vulcanisé.

De préférence, quand l'unité UR et l'unité UN sont des unités de vulcanisation, le traitement selon (i.2) et (ii.2) dans ces unités de vulcanisation comprend vulcaniser un pneumatique non vulcanisé dans un moule.

Cela permet d'obtenir avec le traitement selon (i.2) un élément PR étant un pneumatique vulcanisé et avec le traitement selon (ii.2) un élément PN étant un pneumatique vulcanisé.

De préférence, la qualité de l'élément PN de type P est supérieure ou égale à la qualité de l'élément PR de type P, plus préférablement supérieure à la qualité de l'élément PR de type P.

De préférence la méthode comprend en outre :
(iv) l'arrêt de fonctionnement de l'unité de traitement UR et son retrait de l'usine.

De préférence l'unité de traitement UR retirée de l'usine selon (iv) est recyclée.

La présente invention concerne en outre une méthode de modernisation d'une usine de production de pneumatique, la méthode comprenant plusieurs remplacements d'unités de traitement servant à la production de pneumatique par des autres unités de traitement de même type, dans laquelle lesdites autres unités de traitement sont connectées les unes aux autres par un réseau, dans laquelle la méthode comprend opérer chaque remplacement d'unité de traitement selon les étapes de la méthode de remplacement selon la présente invention.

Ainsi, la présente invention concerne une méthode de modernisation d'une usine de production de pneumatique, la méthode comprenant plusieurs remplacements d'unités de traitement servant à un procédé de production de pneumatique par des autres unités de traitement de même type, dans laquelle lesdites autres unités de traitement sont connectées les unes aux autres par un réseau, dans laquelle la méthode comprend opérer chaque remplacement d'unité de traitement selon une méthode de remplacement d'une unité de traitement pour la préparation d'un élément de pneumatique, l'élément étant de type P, la méthode de remplacement comprenant :
(i) préparer un élément de pneumatique PR de type P dans l'unité de traitement UR, comprenant
   (i.1) diriger au moins un flux SE comprenant au moins un composant E pour l'élément de pneumatique de type P dans l'unité UR ;
   (i.2) traiter l'au moins un composant E dans l'unité UR, obtenant l'élément PR de type P ;
   (i.3) retirer un flux SPR comprenant l'élément PR de l'unité UR ;
(ii) préparer une unité de traitement UN pour mise en fonction, comprenant
   (ii.1) fournir l'unité de traitement UN ;
   (ii.2) installer l'unité UN à un emplacement dans l'usine de production de pneumatique permettant le passage du au moins un flux SE dans UN ;
   (ii.3) mettre l'unité UN dans un état prêt à fonctionner ;
(iii) remplacer au moins partiellement le traitement de l'au moins un composant E dans l'unité UR par le traitement dans l'unité UN, comprenant
   (iii.1) rediriger au moins une partie du flux SE, sans l'interrompre, de l'unité UR vers l'unité UN;
   (iii.2) traiter l'au moins une partie du flux SE dans l'unité UN, obtenant un élément PN de type P ; et
   (iii.3) retirer un flux SPN comprenant l'élément PN de l'unité UN ;
   dans laquelle l'unité UR et l'unité UN sont du même type et dans laquelle chaque remplacement se fait sans interrompre le procédé de production de pneumatique dans l'usine de production pneumatique comprenant l'unité de traitement UR.

De préférence, le réseau est un réseau interne, par exemple un intranet, ou un réseau externe.

En effet, cela permet aux unités de communiquer entre elles pour améliorer l'efficacité de la production de pneumatique.

De préférence les remplacements se font successivement ou simultanément, de plus préférablement successivement.

De préférence les étapes de remplacements décrites dans la méthode de modernisation sont telles que divulguées ici dans le contexte de la méthode de remplacement de la présente invention.

La présente invention concerne en outre un procédé continu de production de pneumatique dans une usine de production de pneumatique, comprenant une méthode de remplacement d'une unité de traitement pour la préparation d'un élément de pneumatique, l'élément étant de type P, selon la présente invention.

Ainsi la présente invention concerne un procédé continu de production de pneumatique dans une usine de production de pneumatique, comprenant une méthode de remplacement d'une unité de traitement pour la préparation d'un élément de pneumatique, l'élément étant de type P, dans l'usine de production pneumatique comprenant une unité de traitement UR, la méthode comprenant
(i) préparer un élément de pneumatique PR de type P dans l'unité de traitement UR, comprenant
   (i.1) diriger au moins un flux SE comprenant au moins un composant E pour l'élément de pneumatique de type P dans l'unité UR ;
   (i.2) traiter l'au moins un composant E dans l'unité UR, obtenant l'élément PR de type P ;
   (i.3) retirer un flux SPR comprenant l'élément PR de l'unité UR ;
(ii) préparer une unité de traitement UN pour mise en fonction, comprenant
(ii.1) fournir l'unité de traitement UN ;
   (ii.2) installer l'unité UN à un emplacement dans l'usine de production de pneumatique permettant le passage du au moins un flux SE dans UN ;
   (ii.3) mettre l'unité UN dans un état prêt à fonctionner ;
(iii) remplacer au moins partiellement le traitement de l'au moins un composant E dans l'unité UR par le traitement dans l'unité UN, comprenant
   (iii.1) rediriger au moins une partie du flux SE, sans l'interrompre, de l'unité UR vers l'unité UN;
   (iii.2) traiter l'au moins une partie du flux SE dans l'unité UN, obtenant un élément PN de type P ; et
   (iii.3) retirer un flux SPN comprenant l'élément PN de l'unité UN ;
   dans laquelle l'unité UR et l'unité UN sont du même type.

De préférence les étapes de remplacements décrites dans le contexte du procédé continu de production de pneumatique sont telles que divulguées ici dans le contexte de la méthode de remplacement de la présente invention.

La présente invention concerne en outre une usine de production de pneumatique, pour la mise en œuvre d'un procédé de production de pneumatique selon la présente invention, l'usine comprenant une unité UR de traitement pour la préparation d'un élément de pneumatique PR; un moyen pour diriger un flux SE comprenant au moins un composant E pour l'élément de pneumatique de type P dans l'unité UR ; un moyen pour retirer un flux SPR comprenant l'élément PR de l'unité UR ;une unité de traitement UN pour la préparation d'un élément de pneumatique PN ; un emplacement pour l'unité UN permettant le passage du au moins un flux SE dans UN ; un moyen pour rediriger au moins une partie du flux SE, sans l'interrompre, de l'unité UR vers l'unité UN; un moyen pour retirer un flux SPN comprenant l'élément PN de l'unité UN ;dans laquelle l'unité UR et l'unité UN sont du même type.

De préférence l'unité UR et l'unité UN sont sélectionnées parmi le groupe consistant en une unité de mélange, une unité d'extrusion, une unité de coupe, une unité d'enroulement des perles et d'application d'apex, une unité d'assemblage et une unité de vulcanisation.

De préférence l'usine comprenant en outre au moins deux autres unités de traitement US, ces au moins deux unités US étant de type différent de UR et UN.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « La méthode de l'un quelconque des modes de réalisation 1 à 3 », chaque mode de réalisation dans cette gamme est censé être explicitement divulgué à l'homme du métier, c'est-à-dire que la formulation de ce terme doit être comprise par l'homme du métier comme étant synonyme de « la méthode de l'un quelconque des modes de réalisation 1, 2 et 3 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention.

Selon le mode de réalisation 1 de la présente invention, une méthode pour un remplacement d'une unité de traitement pour la préparation d'un élément de pneumatique, l'élément étant de type P, au cours d'un procédé non interrompu de production de pneumatique dans une usine de production pneumatique comprenant une unité de traitement UR, la méthode comprenant
(i) préparer un élément de pneumatique PR de type P dans l'unité de traitement UR, comprenant
   (i.1) diriger au moins un flux SE comprenant au moins un composant E pour l'élément de pneumatique de type P dans l'unité UR ;
   (i.2) traiter l'au moins un composant E dans l'unité UR, obtenant l'élément PR de type P ;
   (i.3) retirer un flux SPR comprenant l'élément PR de l'unité UR ;
(ii) préparer une unité de traitement UN pour mise en fonction, comprenant
   (ii.1) fournir l'unité de traitement UN ;
   (ii.2) installer l'unité UN à un emplacement dans l'usine de production de pneumatique permettant le passage du au moins un flux SE dans UN ;
   (ii.3) mettre l'unité UN dans un état prêt à fonctionner ;
(iii) remplacer au moins partiellement le traitement de l'au moins un composant E dans l'unité UR par le traitement dans l'unité UN, comprenant
   (iii.1) rediriger au moins une partie du flux SE, sans l'interrompre, de l'unité UR vers l'unité UN;
   (iii.2) traiter l'au moins une partie du flux SE dans l'unité UN, obtenant un élément PN de type P; et
   (iii.3) retirer un flux SPN comprenant l'élément PN de l'unité UN ;
   dans laquelle l'unité UR et l'unité UN sont du même type.

Mode de réalisation 2 : Une méthode selon le mode de réalisation 1, dans laquelle l'unité UR et l'unité UN sont sélectionnées parmi le groupe consistant en une unité de mélange, une unité d'extrusion, une unité de coupe, une unité d'enroulement des perles et d'application d'apex, une unité d'assemblage et une unité de vulcanisation.

Mode de réalisation 3 : La méthode selon le mode de réalisation 1 ou 2, dans laquelle le flux SE dirigé selon (i.1) est continu ou discontinu.

Mode de réalisation 4 : La méthode selon un quelconque des modes de réalisations 1 à 3, dans laquelle le flux SPR comprenant l'élément PR de l'unité UR est en outre dirigé à une étape ultérieure du procédé non interrompu de production pneumatique.

Mode de réalisation 5 : La méthode selon un quelconque des modes de réalisations 1 à 4, dans laquelle l'unité de traitement UN fournie selon (ii.1) remplaçant l'unité UR est une unité ayant plus de fonctionnalités techniques que cette unité UR.

Mode de réalisation 6 : La méthode selon un quelconque des modes de réalisations 1 à 5, dans laquelle l'unité de traitement UN fournie selon (ii.1) est une unité de traitement permettant l'automatisation au moins partielle, de préférence l'automatisation, dudit traitement.

Mode de réalisation 7 : La méthode selon un quelconque des modes de réalisations 1 à 6, dans laquelle l'installation de UN selon (ii.2) se fait soit dans une zone existante Z1 comprenant UR, soit dans une zone Z2 de l'usine à un emplacement dans l'usine de production de pneumatique permettant le passage du au moins un flux SE dans UN , Z1 étant différente de Z2.

Mode de réalisation 8 : La méthode selon un quelconque des modes de réalisations 1 à 7, dans laquelle mettre l'unité UN dans un état prêt à fonctionner selon (ii.3) comprend la programmation de cette unité, de préférence pour le fonctionnement optimal de cette unité au sein du procédé non interrompu de production de pneumatique.

Mode de réalisation 9 : La méthode selon un quelconque des modes de réalisations 1 à 8, dans laquelle (iii.1) comprend rediriger le flux SE, sans l'interrompre, de l'unité UR vers l'unité UN.

Mode de réalisation 10 : La méthode selon un quelconque des modes de réalisations 1 à 9, dans laquelle le flux SPN comprenant l'élément PN de l'unité UR est en outre dirigé à une étape ultérieure dans le procédé non interrompu de production pneumatique.

Mode de réalisation 11 : La méthode selon un quelconque des modes de réalisations 1 à 10, dans laquelle, quand l'unité UR et l'unité UN sont des unités de mélange, le composant E comprend au moins deux composés chimiques, de préférence au moins un des deux composés chimiques étant du caoutchouc naturel et/ou synthétique.

Mode de réalisation 12 : La méthode selon un quelconque des modes de réalisations 1 à 11, dans laquelle, quand l'unité UR et l'unité UN sont des unités de mélange, le traitement selon (i.2) et (ii.2) dans ces unités de mélange comprend mélanger le composant E comprenant au moins deux composés chimiques, de préférence dans laquelle au moins un des deux composés chimiques est du caoutchouc naturel et/ou synthétique.

Mode de réalisation 13 : La méthode selon un quelconque des modes de réalisations 1 à 10, dans laquelle, quand l'unité UR et l'unité UN sont des unités d'extrusion, le composant E comprend un mélange de composés chimiques, de préférence comprenant du caoutchouc naturel et/ou synthétique.

Mode de réalisation 14 : La méthode selon un quelconque des modes de réalisations 1 à 10 et 13, dans laquelle, quand l'unité UR et l'unité UN sont des unités d'extrusion, le traitement selon (i.2) et (ii.2) dans ces unités d'extrusion comprend extruder un mélange de composés chimiques, de préférence comprenant du caoutchouc naturel et/ou synthétique.

Mode de réalisation 15 : La méthode selon un quelconque des modes de réalisations 1 à 10, dans laquelle, quand l'unité UR et l'unité UN sont des unités d'assemblage, le composant E comprend des composants de pneumatique, de préférence incluant une carcasse, des flancs et une bande de roulement.

Mode de réalisation 16 : La méthode selon un quelconque des modes de réalisations 1 à 10 et 15, dans laquelle, quand l'unité UR et l'unité UN sont des unités d'assemblage, le traitement selon (i.2) et (ii.2) dans ces unités d'assemblage comprend assembler des composants de pneumatique sur un tambour de fabrication, dans laquelle de préférence les composants de pneumatique comprennent une carcasse, des flancs et une bande de roulement.

Mode de réalisation 17 : La méthode selon un quelconque des modes de réalisations 1 à 10, dans laquelle, quand l'unité UR et l'unité UN sont des unités de vulcanisation, le composant E est un pneumatique non vulcanisé.

Mode de réalisation 18 : La méthode selon un quelconque des modes de réalisations 1 à 10 et 18, dans laquelle, quand l'unité UR et l'unité UN sont des unités de vulcanisation, le traitement selon (i.2) et (ii.2) dans ces unités de vulcanisation comprend vulcaniser un pneumatique non vulcanisé dans un moule.

Mode de réalisation 19 : La méthode selon un quelconque des modes de réalisations 1 à 18, comprenant en outre
(iv) l'arrêt de fonctionnement de l'unité de traitement UR et son retrait de l'usine.

Mode de réalisation 20 : La méthode selon le mode de réalisation 19, dans laquelle l'unité de traitement UR retirée de l'usine selon (iv) est recyclée.

Mode de réalisation 21 : Une méthode de modernisation d'une usine de production de pneumatique, la méthode comprenant plusieurs remplacements d'unités de traitement servant à la production de pneumatique par des autres unités de traitement de même type, dans laquelle lesdites autres unités de traitement sont connectées les unes aux autres par un réseau, dans laquelle la méthode comprend opérer chaque remplacement d'unité de traitement selon les étapes de la méthode de remplacement selon l'un quelconque des modes de réalisations 1 à 20.

Mode de réalisation 22 : La méthode de modernisation selon le mode de réalisation 21, dans laquelle les remplacements se font successivement ou simultanément, de préférence successivement.

Mode de réalisation 23 : Un procédé continu de production de pneumatique dans une usine de production de pneumatique, comprenant une méthode de remplacement d'une unité de traitement pour la préparation d'un élément de pneumatique, l'élément étant de type P, selon l'un quelconque des modes de réalisations 1 à 20.

Mode de réalisation 24 : Une usine de production de pneumatique, pour la mise en œuvre d'un procédé de production de pneumatique selon le mode de réalisation 23, l'usine comprenant une unité UR de traitement pour la préparation d'un élément de pneumatique PR; un moyen pour diriger un flux SE comprenant au moins un composant E pour l'élément de pneumatique de type P dans l'unité UR ; un moyen pour retirer un flux SPR comprenant l'élément PR de l'unité UR ;une unité de traitement UN pour la préparation d'un élément de pneumatique PN ; un emplacement pour l'unité UN permettant le passage du au moins un flux SE dans UN ; un moyen pour rediriger au moins une partie du flux SE, sans l'interrompre, de l'unité UR vers l'unité UN ; un moyen pour retirer un flux SPN comprenant l'élément PN de l'unité UN ; dans laquelle l'unité UR et l'unité UN sont du même type.

Mode de réalisation 25 : Une usine selon le mode de réalisation 24, dans laquelle l'unité UR et l'unité UN sont sélectionnées parmi le groupe consistant en une unité de mélange, une unité d'extrusion, une unité de coupe, une unité d'enroulement des perles et d'application d'apex, une unité d'assemblage et une unité de vulcanisation.

Mode de réalisation 26 : Une usine selon le mode de réalisation 24 ou 25, dans laquelle l'usine comprenant en outre au moins deux autres unités de traitement US, ces au moins deux unités US étant de type différent de UR et UN.

### Description des figures

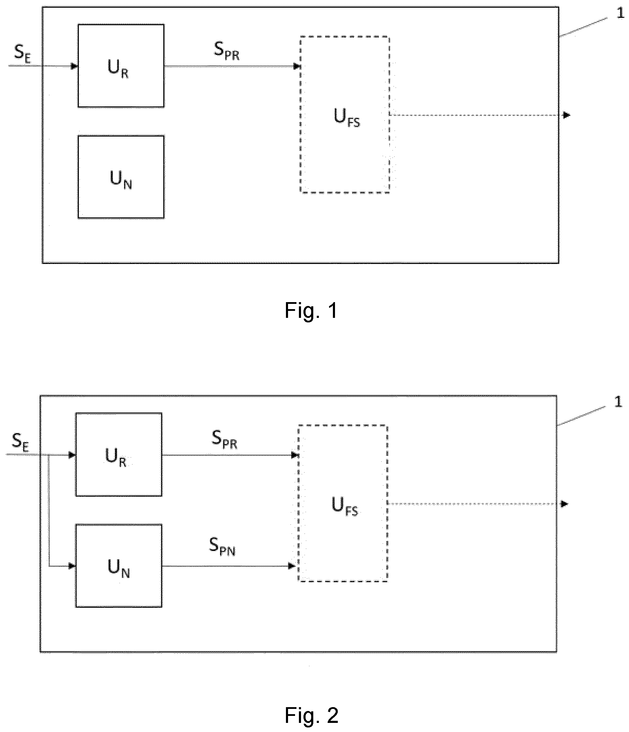

Les FIG.1 et FIG.2 représentent certaines étapes des modes de réalisation de la méthode de remplacement de la présente invention. La FIG. 1 représente le fonctionnement de l'unité UR avant le début du replacement d'unité de traitement, lors du procédé non interrompu de fabrication de pneumatique dans une usine de production de pneumatique 1, pour la préparation d'un élément PR de type P. Le flux SE comprenant au moins un composant E pour l'élément de pneumatique de type P est dirigé dans l'unité UR, le composant E est ensuite traité dans l'unité UR, pour obtenir l'élément PR de type P, enfin le flux SPR comprenant l'élément PR est retiré de UR.

Optionnellement, le flux SPR comprenant PR est dirigé dans une autre unité de traitement UFS pour l'obtention d'un produit de pneumatique de type P. La FIG. 2 représente le fonctionnement de l'unité UR, lors du procédé non interrompu de fabrication de pneumatique dans une usine de production de pneumatique 1, pour la préparation d'un élément PR de type P et le fonctionnement de l'unité UN, lors du procédé non interrompu de fabrication de pneumatique dans une usine de production de pneumatique 1, pour la préparation d'un élément PN de type P. Ces deux unités fonctionnent en parallèle pendant un certain temps. Pour cela une portion de SE est dirigée dans UN et une portion de SE est dirigée dans UR. Optionnellement, les deux flux SPN et SPR sont dirigés dans une autre unité de traitement UFS pour l'obtention d'un produit de pneumatique de type P.

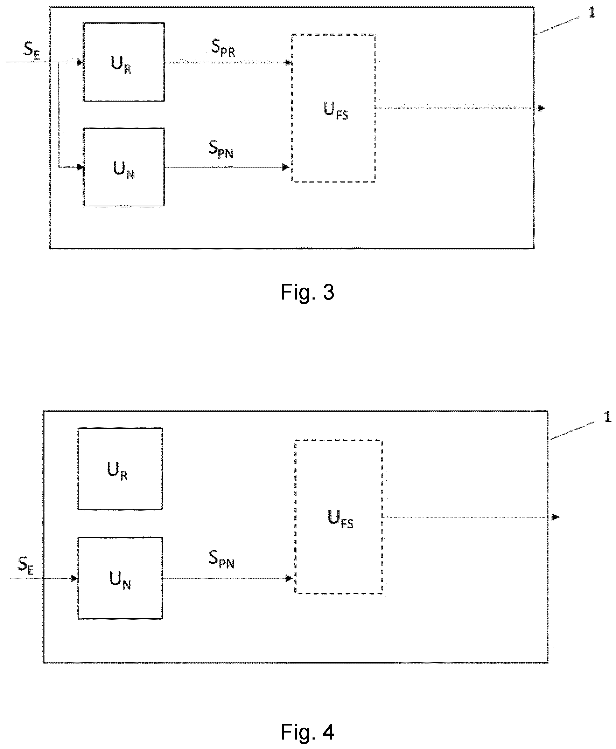

Les FIG.3 et FIG.4 représentent certaines étapes des modes de réalisation de la méthode de remplacement de la présente invention. La FIG. 3 représente l'arrêt progressif du fonctionnement de l'unité UR après la mise en état de fonctionner de UN et le début du remplacement de UR par UN, lors du procédé non interrompu de fabrication de pneumatique dans une usine de production de pneumatique 1, pour la préparation d'un élément de pneumatique PN de type P. Une portion puis l'ensemble du flux SE comprenant au moins un composant E pour l'élément de pneumatique de type P est dirigé dans UN, le composant E est ensuite traité dans l'unité UN, pour obtenir l'élément PN de type P, enfin le flux SPN comprenant l'élément PN est retiré de UN. Optionnellement, SPN est dirigé dans une autre unité de traitement UFS pour l'obtention d'un produit de pneumatique de type P. Selon la FIG. 4, le procédé non interrompu de production de pneumatique se poursuit avec l'unité de traitement U_{N}.

## Revendications

1. Une méthode pour un remplacement d'une unité de traitement pour la préparation d'un élément de pneumatique, l'élément étant de type P, au cours d'un procédé non interrompu de production de pneumatique dans une usine de production pneumatique comprenant une unité de traitement U_{R}, la méthode comprenant
(i) préparer un élément de pneumatique P_{R} de type P dans l'unité de traitement U_{R}, comprenant
(i.1) diriger au moins un flux S_{E} comprenant au moins un composant E pour l'élément de pneumatique de type P dans l'unité U_{R} ;
(i.2) traiter l'au moins un composant E dans l'unité U_{R}, obtenant l'élément P_{R} de type P ;
(i.3) retirer un flux S_{PR} comprenant l'élément P_{R} de l'unité U_{R} ;
(ii) préparer une unité de traitement U_{N} pour mise en fonction, comprenant
(ii.1) fournir l'unité de traitement U_{N} ;
(ii.2) installer l'unité U_{N} à un emplacement dans l'usine de production de pneumatique permettant le passage du au moins un flux S_{E} dans U_{N} ;
(ii.3) mettre l'unité U_{N} dans un état prêt à fonctionner ;
(iii) remplacer au moins partiellement le traitement de l'au moins un composant E dans l'unité U_{R} par le traitement dans l'unité U_{N}, comprenant
(iii.1) rediriger au moins une partie du flux S_{E}, sans l'interrompre, de l'unité U_{R} vers l'unité U_{N} ;
(iii.2) traiter l'au moins une partie du flux S_{E} dans l'unité U_{N}, obtenant un élément P_{N} de type P ;
(iii.3) retirer un flux S_{PN} comprenant l'élément P_{N} de l'unité U_{N} ;
dans laquelle l'unité U_{R} et l'unité U_{N} sont du même type.

2. Une méthode selon la revendication 1, dans laquelle l'unité U_{R} et l'unité U_{N} sont sélectionnées parmi le groupe consistant en une unité de mélange, une unité d'extrusion, une unité de coupe, une unité d'enroulement des perles et d'application d'apex, une unité d'assemblage et une unité de vulcanisation.

3. La méthode selon la revendication 1 ou 2, dans laquelle l'unité de traitement U_{N} fournie selon (ii.1) est une unité de traitement permettant l'automatisation au moins partielle, de préférence l'automatisation, dudit traitement.

4. La méthode selon une quelconque des revendications 1 à 3, dans laquelle l'installation de U_{N} selon (ii.2) se fait soit dans une zone existante Z1 comprenant U_{R}, soit dans une zone Z2 de l'usine à un emplacement dans l'usine de production de pneumatique permettant le passage du au moins un flux S_{E} dans U_{N} , Z1 étant différente de Z2.

5. La méthode selon une quelconque des revendications 1 à 4, dans laquelle mettre l'unité U_{N} dans un état prêt à fonctionner selon (ii.3) comprend la programmation de cette unité, de préférence pour le fonctionnement optimal de cette unité au sein du procédé non interrompu de production de pneumatique.

6. La méthode selon une quelconque des revendications 1 à 5, dans laquelle, quand l'unité U_{R} et l'unité U_{N} sont des unités de mélange, le composant E comprend au moins deux composés chimiques, de préférence au moins un des deux composés chimiques étant du caoutchouc naturel et/ou synthétique ; dans laquelle de préférence, quand l'unité U_{R} et l'unité U_{N} sont des unités de mélange, le traitement selon (i.2) et (ii.2) dans ces unités de mélange comprend mélanger le composant E comprenant au moins deux composés chimiques, de préférence dans laquelle au moins un des deux composés chimiques est du caoutchouc naturel et/ou synthétique.

7. La méthode selon une quelconque des revendications 1 à 5, dans laquelle, quand l'unité U_{R} et l'unité U_{N} sont des unités d'assemblage, le composant E comprend des composants de pneumatique, de préférence incluant une carcasse, des flancs et une bande de roulement ; dans laquelle de préférence, quand l'unité U_{R} et l'unité U_{N} sont des unités d'assemblage, le traitement selon (i.2) et (ii.2) dans ces unités d'assemblage comprend assembler des composants de pneumatique sur un tambour de fabrication, dans laquelle de préférence les composants de pneumatique comprennent une carcasse, des flancs et une bande de roulement.

8. La méthode selon une quelconque des revendications 1 à 5, dans laquelle, quand l'unité U_{R} et l'unité U_{N} sont des unités de vulcanisation, le composant E est un pneumatique non vulcanisé ; dans laquelle de préférence, quand l'unité U_{R} et l'unité U_{N} sont des unités de vulcanisation, le traitement selon (i.2) et (ii.2) dans ces unités de vulcanisation comprend vulcaniser un pneumatique non vulcanisé dans un moule.

9. La méthode selon une quelconque des revendications 1 à 8, comprenant en outre : (iv) l'arrêt de fonctionnement de l'unité de traitement U_{R} et son retrait de l'usine.

10. La méthode selon la revendication 9, dans laquelle l'unité de traitement U_{R} retirée de l'usine selon (iv) est recyclée.

11. Une méthode de modernisation d'une usine de production de pneumatique, la méthode comprenant plusieurs remplacements d'unités de traitement servant à la production de pneumatique par des autres unités de traitement de même type, dans laquelle lesdites autres unités de traitement sont connectées les unes aux autres par un réseau ; et dans laquelle la méthode comprend opérer chaque remplacement d'unité de traitement selon les étapes de la méthode de remplacement selon l'une quelconque des revendications 1 à 10.

12. Un procédé continu de production de pneumatique dans une usine de production de pneumatique, comprenant une méthode de remplacement d'une unité de traitement pour la préparation d'un élément de pneumatique, l'élément étant de type P, selon l'une quelconque des revendications 1 à 10.

13. Une usine de production de pneumatique, pour la mise en œuvre d'un procédé de production de pneumatique selon la revendication 12, l'usine comprenant :
une unité U_{R} de traitement pour la préparation d'un élément de pneumatique P_{R};
un moyen pour diriger un flux S_{E} comprenant au moins un composant E pour l'élément de pneumatique de type P dans l'unité U_{R} ;
un moyen pour retirer un flux S_{PR} comprenant l'élément P_{R} de l'unité U_{R} ;
une unité de traitement U_{N} pour la préparation d'un élément de pneumatique P_{N} ;
un emplacement pour l'unité U_{N} permettant le passage du au moins un flux S_{E} dans U_{N} ;
un moyen pour rediriger au moins une partie du flux S_{E}, sans l'interrompre, de l'unité U_{R} vers l'unité U_{N} ; et
un moyen pour retirer un flux S_{PN} comprenant l'élément P_{N} de l'unité U_{N} ;
dans laquelle l'unité U_{R} et l'unité U_{N} sont du même type.
